# FASCICULE DE BREVET EUROPEEN

(11) **EP 0 811 183 B1**
(45) Date de publication et mention de la délivrance du brevet: **16.06.1999**
(21) Numéro de dépôt: 96904896.6
(22) Date de dépôt: 22.02.1996
(51) Int. Cl.: G05D 1/00

(54) **DISPOSITIF D'AIDE AU PILOTAGE**
VORRICHTUNG ZUR STEUERUNGSHILFE
FLIGHT CONTROL ASSISTANCE DEVICE

(30) Priorité: 23.02.1995 FR 9502091
(43) Date de publication de la demande: 10.12.1997
(73) Titulaire: Pelletier, Patrick, 91220 Bretigny-sur-Orge (FR)
(72) Inventeur: Pelletier, Patrick, 91220 Bretigny-sur-Orge (FR)
(74) Mandataire: Le Moenner, Annie (FR)
(86) Numéro de dépôt international: FR9600284
(87) Numéro de publication internationale: WO9626472

(56) Documents cités:
- DE-C- 4 125 372
- US-A- 3 927 307
- US-A- 5 050 081

## Description

La présente invention concerne le domaine des dispositions pour la mesure donnant des résultats autres que la valeur instantanée d'une variable et a plus particulièrement pour objet un indicateur de limitation de puissance d'un aéronef.

Il est connu d'utiliser des systèmes donnant des renseignements sur les paramètres moteurs et les contraintes de vol d'un aéronef.

Ainsi, à titre d'exemples, les brevets US5050081 et FR2585823 sont cités. Le brevet US5050081 décrit un dispositif de gestion de la poussée de chaque réacteur d'un avion de transport et du contrôle de bon fonctionnement des paramètres de ces réacteurs, ce dispositif permettant notamment de calculer et d'afficher la poussée théorique maximale disponible, la poussée commandée par le pilote en fonction de la position de la manette des gaz, ainsi que la poussée réelle. Il permet, en outre, d'afficher, dans certain cas, une information relative à l'écart entre la valeur mesurée d'une grandeur, par exemple la vitesse de rotation du compresseur basse pression et sa valeur limite prédéfinie. Le dispositif comprend des moyens de mesure de la valeur de variables physiques relatives notament aux moyens de propulsion et aux conditions d'environnement, des moyens de visualisation et un processeur dans lequel a été introduite la modélisation des moteurs.

Le brevet FR 2585823 décrit un dispositif appliqué au chargement de fret par crochet et comportant principalement des capteurs de mesure de la charge de crochet, de débit de carburant, de température de l'air extérieur, de l'altitude ainsi qu'un processeur de calcul et des moyens d'affichage.

Ce dispositif permet notamment de calculer la valeur du couple moteur disponible pour franchir une distance donnée, ainsi que la valeur du couple maximal utilisable pendant un temps donné.

Ces valeurs de couple sont données en pourcentage par rapport aux limites de fonctionnement de la transmission mécanique.

Or, il s'avère que cette seule limitation est insuffisante pour gérer correctement l'installation motrice. Le pilote doit donc consulter un certain nombre d'autres paramètres affichés sur des cadrans différents pour estimer si le fonctionnement des moteurs est correct.

La gestion des moteurs est très délicate dès que le pilote doit approcher les limites de performance de ces derniers.

Aussi, pour ne pas user prématurément les moteurs, la plupart des pilotes éprouvent des difficultés à les exploiter au maximum en raison, de la multiplicité des limitations à respecter.

Ceci est dû au fait que la mécanique de vol est très complexe, que les conditions de vol sont très sensibles aux sollicitations même mesurées du pilote, et que ce dernier a un trop grand nombre de paramètres à surveiller.

Si, par hasard, un pilote ne peut empêcher qu'un paramètre moteur dépasse sa valeur limite, il s'ensuit que, outre une usure prématurée, une opération de maintenance complémentaire, qui coûte cher et immobilise l'aéronef pendant des délais très longs, est nécessaire.

L'un des buts de l'invention est de remédier à ces inconvénients en proposant un dispositif permettant à un pilote d'optimiser le fonctionnement de l'aéronef dans toutes phases de fonctionnement.

La solution apportée est un dispositif d'aide au pilotage d'un aéronef comportant des moyens de mesure de la valeur instantanée de variables physiques relatives notamment aux moyens de propulsion et aux conditions d'environnement et caractérisé en ce qu'il comporte des moyens aptes à visualiser, en tout point du domaine de vol avec puissance et à partir desdites valeurs mesurées, une information représentative de l'écart entre la puissance consommée par les moyens de propulsion et une puissance maximale prédéfinie, ces moyens comportant un processeur de bord dans lequel à été introduite la modélisation de la mécanique de vol ainsi que celle des moteurs dans tout le domaine de vol de l'aéronef, et un écran de visualisation.
Par puissance consommée par les moyens de propulsion, il faut entendre la puissance délivrée par l'installation motrice.

Selon une caractéristique particulièrement avantageuse de l'invention, ces moyens sont aptes à visualiser, en plus de ladite information, des informations relatives à l'évolution de cet écart pour toute action faible mais contrôlable du pilote sur la commande principale de puissance et sont aussi aptes à déterminer le mode de fonctionnement de l'aéronef à partir desdites valeurs mesurées.

Selon une caractéristique particulière de l'invention, ces moyens sont constitués par un processeur dans lequel à été introduite la modélisation de la mécanique de vol et des moteurs dans tout le domaine de vol de l'aéronef, et par un écran de visualisation.

Selon un mode de réalisation de l'invention, le dispositif d'aide au pilotage est un indicateur de premières limitations de puissance et les puissances consommée et maximale sont représentées respectivement par les valeurs instantanées et maximales des variables mesurées limitatives de puissance et en ce que l'information relative à l'écart entre ces puissances correspond à l'écart le plus faible, entre la valeur instantanée et la valeur maximale, de ces variables limitatives.

Selon une caractéristique additionnelle, les valeurs instantanées et maximales des variables mesurées limitatives de puissance sont visualisées, sur l'écran, sur des axes, différents pour chaque variable mais ayant la même origine.

Dans une application particulière aux à turbomoteur(s), les variables limitatives principales sont mesurées par quatre capteurs principaux respectivement de la vitesse de rotation Nᵣ du rotor, de la vitesse de rotation Nₜ de la turbine du turbomoteur, de la température Tₜ de la turbine et du couple C de transmission mécanique et les valeurs instantanées de la vitesse par rapport à l'air de l'hélicoptère, de sa hauteur par rapport au sol, de son altitude, de la pression et de la température du ou des moteurs, du débit de carburant, des positions des commandes de vol ainsi que de la vitesse par rapport au sol, sont mesurées afin de déterminer le mode de fonctionnement de l'hélicoptère.

Selon d'autres caractéristiques de l'invention, les moyens sont aptes à visualiser et à déclencher un chronomètre lorsque la puissance instantanée dépasse la puissance maximale disponible autorisée et, dans le cas d'un vol sans puissance, à visualiser une information liée uniquement à la vitesse de rotation du rotor.

Selon une caractéristique intéressant la sécurité de fonctionnement de l'aéronef, lorsque celui-ci est multi-moteurs, les moyens sont aptes à visualiser une information représentative de la puissance maximale de l'hélicoptère en l'absence d'un moteur.

Lorsque l'invention est appliquée à un avion à turbomoteur, les variables limitatives principales sont mesurées par quatre capteurs principaux, respectivement de la vitesse de rotation Nh de l'hélice, de la vitesse de rotation Nt du rotor de la turbine du turbomoteur, de sa température Tₜ et du couple C tandis que lorsqu'il est appliqué à un hélicoptère à moteur à explosion, les variables limitatives principales sont mesurées par quatre capteurs principaux respectivement de la vitesse de rotation Nᵣ du rotor, de la vitesse de rotation Nm du moteur, de la température Tm de la culasse et du couple C de transmission mécanique.

Lorsque l'invention est appliquée à un avion à turboréacteur(s), les variables limitatives principales sont mesurées par deux capteurs principaux, respectivement de la vitesse de rotation Nt de la turbine et de sa température Tₜ.

D'autres avantages et caractéristiques de la présente invention apparaîtront dans la description de plusieurs variantes de mise en oeuvre de l'invention appliquée à un hélicoptère à turbomoteurs, en regard des figures annexées parmi lesquelles :
- la figure 1 présente un schéma général de l'invention,
- la figure 2 montre un schéma des principes de mise en oeuvre de l'invention,
- sur les figures 3a à 3f, sont représentés des schémas de variantes de mise en oeuvre de l'invention sur un écran tête basse,
- les figures 4a, 4b montrent des schémas d'écrans de visualisation utilisables dans le cadre de l'invention,
- les figures 5a à 5m montrent un schéma logique d'enchaînement des indications affichées lors d'un vol.
- les figures 6a à 6e présentent des schémas de variantes de mise en oeuvre de l'invention sur un viseur tête haute.

Pour tout aéronef, et plus particulièrement pour les hélicoptères à turbomoteur(s), la puissance nécessaire en un point de vol est le résultat d'un processus complexe lié notamment,
- aux conditions du point de vol telles que la masse, le facteur de charge, le centrage, l'altitude, la hauteur, la température et la pression de l'air, la vitesse par rapport à l'air,
- aux demandes de puissance via les actions sur le pas collectif et les autres commandes de vol,
- au régime rotor à la fois facteur d'influence et résultat par l'effet des lois de régulation des turbomoteurs et de la mécanique du vol.

Or, la puissance nécessaire en vol peut être limitée notamment par:
- les limites de fonctionnement des turbomoteurs relatives à la température de la turbine, sa vitesse de rotation,
- les limites de fonctionnement de la transmission mécanique
- les limites de l'adaptation du rotor principal qui peut se traduire par un régime rotor trop faible,
- les limites de la durée de délivrance de la puissance,
- les limites de fonctionnement des servitudes comme les températures et pressions des moteurs et des transmissions de l'hydraulique.

Par ailleurs, dans le cas d'un vol stabilisé en puissance, le domaine de fonctionnement continu peut progressivement se restreindre comme, par exemple, en vol stationnaire, en raison d'un refroidissement dynamique insuffisant.

Enfin, la limitation de puissance délivrée ne préjuge en rien d'autres impossibilités à tenir un point de vol comme, par exemple, être en butée de commandes.

Aussi, il a été observé que, pour un hélicoptère à turbomoteur(s), la connaissance instantanée des quatre paramètres que sont les vitesses de rotation Nᵣ et Nₜ, respectivement du rotor et de la turbine du turbomoteur, la température turbine Tₜ et le couple C de transmission mécanique, ainsi que la modélisation recalée de fonctionnement de l'hélicoptère (mécanique de vol ) et de son moteur rendant possible la prédiction de l'évolution à court terme du point de vol en fonction d'une action quantifiée du pilote ou d'un pilote automatique sur la commande de pas cyclique, permettent de fournir une information fiable audit pilote sur la puissance disponible et son évolution à court terme, et ce, quel que soit le type de vol effectué par l'aéronef, (stationnaire, en montée, en descente accélérée avec moteur(s) ou sans moteur...).

Il est à noter que les modèles mathématiques des moteurs et de la mécanique de vol sont, en permanence, recalés autour des points de vol de façon à modéliser réellement les moteurs installés et l'hélicoptère considéré. Ceci est nécessaire pour prendre en compte d'une part, la pénalisation que s'impose le constructeur des moteurs pour garantir un niveau de performances minimal malgré la dispersion de fabrication et d'autre part, la configuration de l'hélicoptère (emports extérieurs, portes ouvertes et optionnels modifiant les caractéristiques aéro-mécaniques de la cellule).

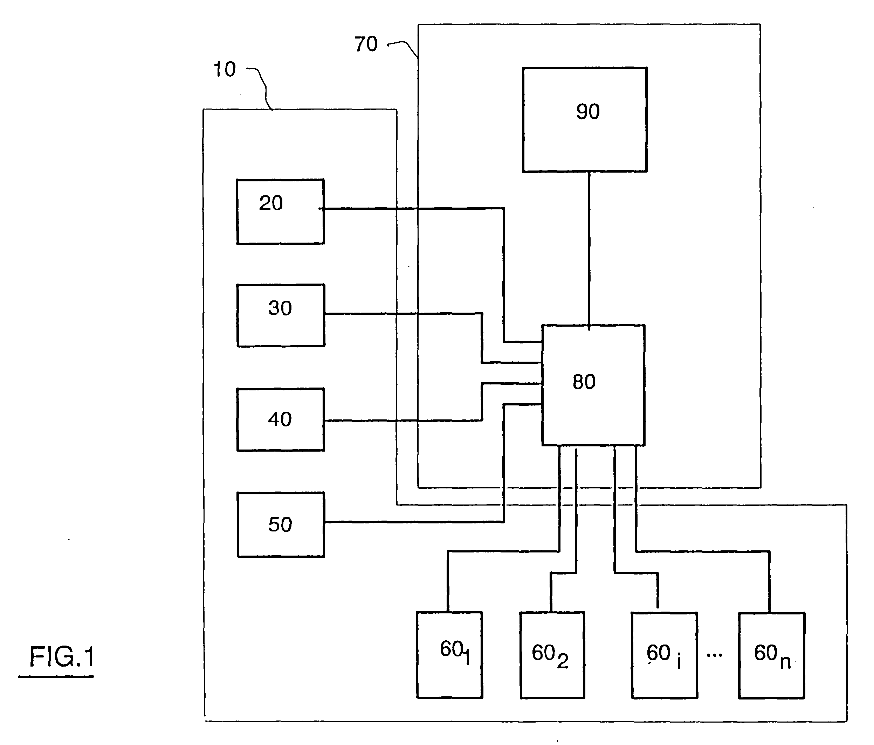

Aussi, la figure 1 présente les moyens de l'invention dans la présente variante de réalisation.

Ils comprennent des moyens 10 de mesure, connus et utilisés à bord des aéronef, de la valeur instantanée de variables physiques relatives notamment aux moyens de propulsion et aux conditions d'environnement et des moyens 70 aptes notamment à visualiser, en tout point du domaine de vol avec puissance et à partir desdites valeurs mesurées, une information représentative de l'écart entre la puissance consommée par les moyens de propulsion et une puissance maximale prédéfinie.

Les moyens de mesure 10 peuvent être classés en deux catégories. La première regroupe les moyens de mesures 20,30,40,50 respectivement de la vitesse de rotation Nᵣ du rotor, de la vitesse de rotation Nₜ de la turbine par turbomoteur, de la température Tₜ de la turbine et du couple C de transmission mécanique, appelés aussi capteurs principaux dans la suite, tandis que la seconde catégorie regroupe un ensemble 60₁ à 60ₙ de capteurs secondaires, comportant des capteurs de la vitesse par rapport à l'air et par rapport au sol, de la hauteur par rapport à ce dernier, de l'altitude, de la pression et de la température, de la position des commandes de vol, c'est-à-dire du pas cyclique, du pas collectif et des palonniers, du débit de carburant et, dans certaines phases de vol, du prélèvement de l'énergie sur les turbomoteurs.

Les limitations de puissance de l'hélicoptère sont directement liées à des valeurs limites des variables mesurées par des capteurs principaux 20,30,40,50 tandis que les valeurs mesurées par des capteurs secondaires 60₁ à 60ₙ sont utilisées pour déterminer le mode de fonctionnement de l'hélicoptère ainsi que pour la prédiction, à court terme, de l'évolution des valeurs des variables issues des capteurs principaux 20,30,40,50.

Les moyens 70 aptes notamment à visualiser , en tout point du domaine de vol avec puissance et à partir desdites valeurs mesurées, une information représentative de l'écart entre la puissance consommée par les moyens de propulsion et une puissance maximale prédéfinie, comprennent un processeur 80, qui peut être un ordinateur embarqué, relié auxdits capteurs 20,30,40,50,60 et à un écran de visualisation 90 et dans lequel sont stockés en mémoire la modélisation, de type connu, de la mécanique de vol et des moteurs.
De plus des données telles que la masse et le centrage initiaux de l'hélicoptère sont introduites dans le calculateur.

L'écran de visualisation 90 peut notamment être constitué par un écran en tête basse ou, à l'aide d'une symbologie restreinte, par un viseur tête haute ou par un indicateur électromécanique classique à 1 où 2 aiguilles, ou encore par un écran électro-luminescent de taille restreinte, du type des écran des micro-ordinateurs de poche.

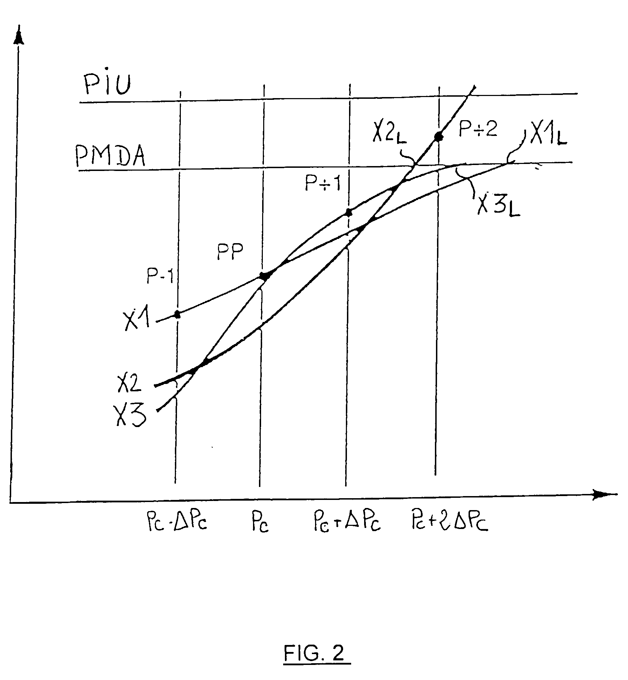

Pour illustrer cette particularité de l'invention, la figure 2, dans laquelle la présentation est limitée à trois paramètres X₁, X₂, X₃ pour des raisons de simplification, représente un réseau de courbes montrant l'évolution de ces paramètres en fonction d'un déplacement ΔP_{C} limité et maîtrisable possible par le pilote du pas collectif autour d'une valeur P_{C}.

Ce réseau est normé et représente à la même échelle tous les paramètres par rapport à leurs limitations.
Bien évidemment ce réseau se déforme en fonction des points de vol mais les conclusions de son exploitation restent les suivantes :
- à chaque ensemble X₁, X₂, X₃ correspond une puissance consommée instantanée et aux valeurs limites X_{L1}, X_{L2}, X_{L3} des paramètres X₁, X₂, X₃ est associé une puissance maximale délivrable autorisée (PMDA) en fonctionnement continu ou "de croisière".
- les valeurs de paramètres X₁, X₂, X₃ existent et une marge de liberté peut être définie par rapport aux valeurs limites X_{L1}, X_{L2}, X_{L3} de ces paramètres.
- si le vol se poursuivait selon les intentions du pilote, les valeurs desdits paramètres évolueraient avec le pas collectif selon les lois élaborées en ce point de vol. Il est possible de les préciser pour différentes variations en plus et en moins du pas collectif.

Dans le présent indicateur, les déplacement ΔP_{C} ne sont pas forcément des unités établies telles que des degrés, mais représentent un débattement net et facilement perceptible et appréhendable par le pilote.

Dans le cas des paramètres de premières limitations Nᵣ ,Nₜ,Tₜ et C précédemment cités, pour chaque ensemble de quatre valeurs [Nᵣ ,Nₜ,Tₜ , C], correspond une valeur de puissance consommée et les valeurs de chaque ensemble doivent être comparées à celles qui correspondent à une valeur limite de cette puissance, appelée puissance maximale délivrable autorisée, variable en fonction du mode de fonctionnement de l'appareil et pour laquelle l'une au moins des valeurs limites des paramètres de premières limitations Nᵣ ,Nₜ,Tₜ et C, est atteinte. Le dépassement de cette puissance provoque une usure prématurée des turbomoteurs, voire des servitudes, donc un accroissement de la durée de leur maintenance et/ou un risque de pannes de ces turbomoteurs.

En fonctionnement continu, dit "de croisière", la puissance maximale délivrable autorisée correspond à la puissance maximale continue (PMC). Dans certaines circonstances exceptionnelles et limitées à de très courtes périodes de temps, le pilote peut faire appel à des puissances maximales délivrables autorisées supérieures à la puissance maximale continue . Ces puissances sont notamment :
- la puissance maximale au décollage (PMD),
et pour les appareils multi-moteurs dont un moteur est inopérant,
- la puissance intermédiaire d'urgence ( PIU)
- la puissance maximale d'urgence ( PMU)
- la puissance de super urgence ( PSU)

Cependant, dans toutes les configurations, la différence entre la puissance maximale délivrable autorisée et la puissance consommée, est égale à la marge de puissance disponible. Elle correspond à la marge de liberté dont dispose le pilote pour accroître la puissance consommée par le vol de l'appareil.

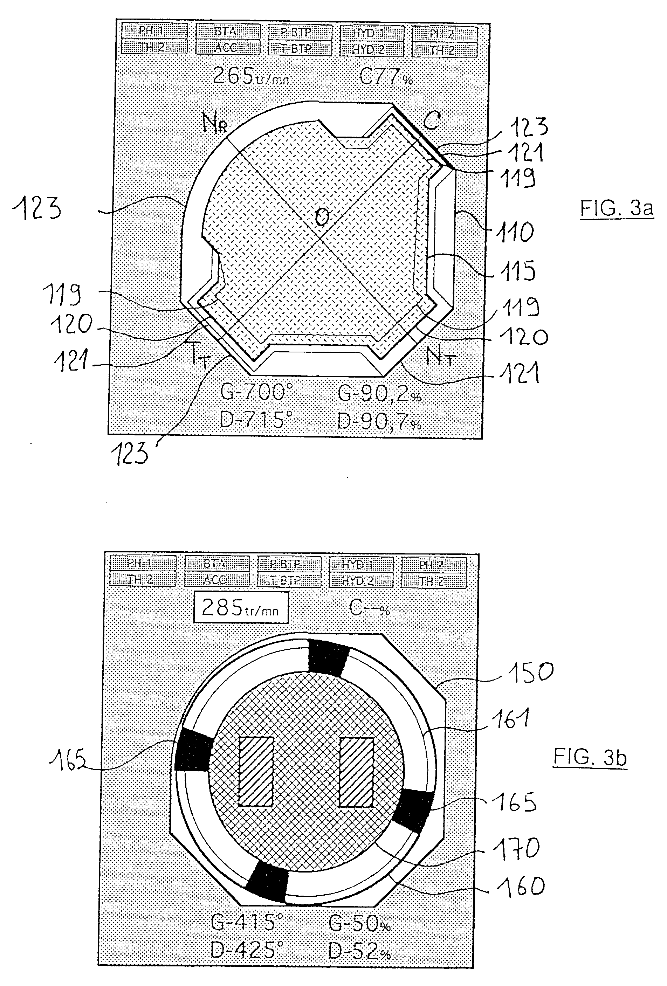

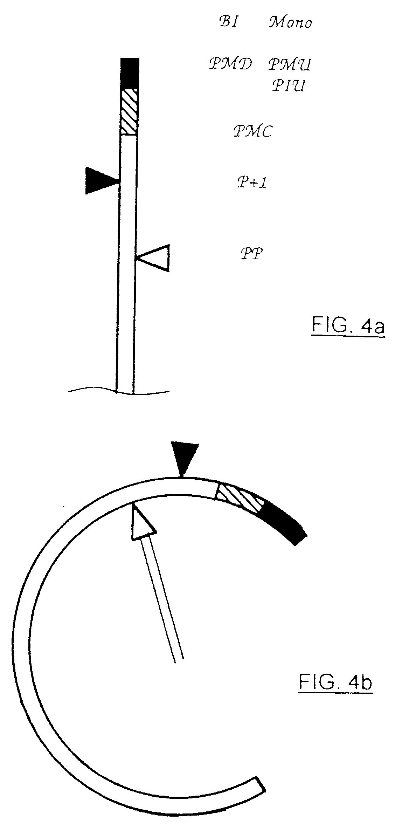

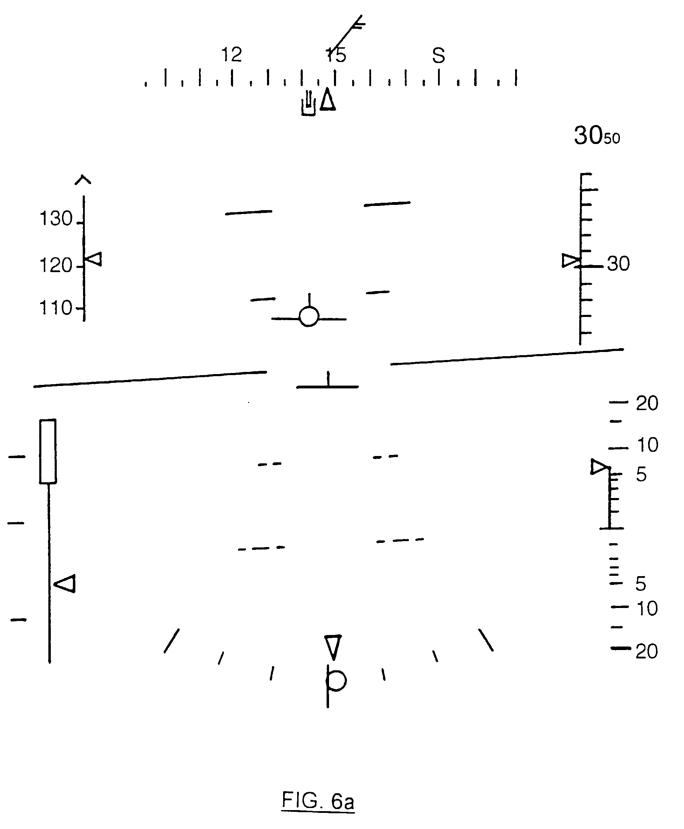

Un tel réseau de courbes peut se décliner en entier avec un indicateur tête basse comme présenté aux figures 3a à 3f ou être synthétisé sur les informations prioritaires, c'est-à-dire les valeurs de paramètres les plus limitatives présentes et prédites affichables sur un indicateur à deux aiguilles, comme illustré aux figures 4a et 4b, ou être présenté en tête haute comme sur les figures 6a à 6e.

Comme mentionné précédemment, les modes de fonctionnement en vol d'un hélicoptère sont très variables et peuvent notamment aller du vol à forte puissance, dans des conditions très proches des limites, au vol avec panne complète des moteurs.

Dans le cas où un seul cadran est utilisé, et compte tenu des valeurs différentes de limitation de puissance dans ces différents types de fonctionnement, il est nécessaire d'afficher, pour chaque mode, uniquement les valeurs utiles au pilote, puisque plus le nombre d'informations indiquées est élevé et plus le risque d'erreur du pilote est important.
Aussi, dans la suite les modes de fonctionnement en vol considérés sont les suivants:
- vol avec puissance
- vol sans puissance
- fin d'un vol après perte des moteurs.

Dans le cas d'un vol avec puissance, c'est-à-dire avec l'installation motrice délivrant une puissance, consommée par l'hélicoptère au point de vol considéré, pouvant s'accroître jusqu'à la puissance maximale délivrable audit point de vol, sont affichées les puissances sous forme de surface ainsi que l'écart entre les puissances consommée et disponible.

Comme montré sur la figure 3a, l'information représentative de l'écart entre les puissance consommée et maximale est affichée à partir d'une représentation selon le principe des vues étoiles de COEKIN/WOODS, et plus précisément sous la forme de quatre axes étalonnés, ayant la même origine et définissant les diagonales d'un quadrilatère, chaque axe correspondant à l'une des limitations Nᵣ,Nₜ,Tₜ et C.
La valeur située à l'extrémité de chacun des axes représente la valeur limite du paramètre limitatif qui lui correspond tandis que la valeur instantanée du paramètre s'affiche à la position correspondante à cette valeur, compte tenu de l'échelle de l'étalonnage.

A partir de ces axes, ont été définies deux surfaces principales, l'une dont la circonférence passe par les valeurs limites des paramètres limitatifs et l'autre par les valeurs instantanées, soit, en se reportant à la figure 3a :
- une première surface 110 de taille fixe représentant l'enveloppe des limitations Nᵣ,Nₜ,Tₜ et C, miroir de la puissance disponible maximale autorisée au point de vol considéré, et ce, quelle que soit sa valeur réelle,
- une seconde surface 120 de taille variable pour la puissance consommée. Cette surface évolue selon une loi adaptée pour permettre une bonne lisibilité lorsque les valeurs Nᵣ,Nₜ,Tₜ et C, sont proches de leur valeur limite.

Cette seconde surface se déforme selon les quatre orientations desdits axes.

Dans cet exemple de réalisation, l'indicateur de limitation de puissance à la forme d'un quadrilatère 110 avec Nₜ,Tₜ et C dans trois coins de la surface du quadrilatère et Nᵣ dans le dernier coin qui a été arrondi et la surface image de l'enveloppe des limitations est un carré qui est modifié sous deux aspects :
* les angles sont chanfreinés pour les puissances continues, à contrario intégrés pour les puissances exceptionnelles et le quart de carré affecté au régime rotor est remplacé par un quart de cercle.
* la taille de cette surface est croissante avec le nombre de moteurs disponibles.

Plus la puissance consommée est importante et plus ladite deuxième surface 120 remplit ladite première surface 110 correspondant à la puissance disponible maximale autorisée. D'une manière avantageuse, elle est d'une couleur liée à l'importance de la marge de puissance disponible, par exemple verte lorsqu'elle est grande et rouge lorsqu'elle est quasi nulle.

L'écart entre les surfaces 120 et 110, c'est à dire entre la valeur des paramètres Nᵣ,Nₜ,Tₜ et C au point de vol et leurs valeurs limites, est représentatif de la marge de puissance disponible en ce point de vol.
Mais en plus, cette information est complétée par des indications de puissances 119,121 qui seraient consommées en un point de vol extrapolé du présent point, avec une valeur, en plus et en moins de pas collectif, commande majeure de demande de puissance.

Ces dernières indications 119, 121 sont élaborées par prédiction autour du point de vol et, de préférence, n'apparaissent que si l'écart entre la puissance disponible et la puissance consommée est faible.

Comme ces indications s'inscrivent au-delà et en deçà de la surface 120 figurant la puissance consommée, le pilote dispose d'informations sur l'évolution des paramètres selon son action sur le pas collectif.

Ces indications sont d'une importance capitale et modifient radicalement le mode de pilotage puisque le pilote qui jusqu'alors ne pouvait agir sur les commandes qu'a posteriori, c'est à dire après observation des conséquences de l'évolution du pas collectif, peut, grâce à ces indications 119, 121, prévenir un dépassement de la PMC tout en fonctionnement au plus près.

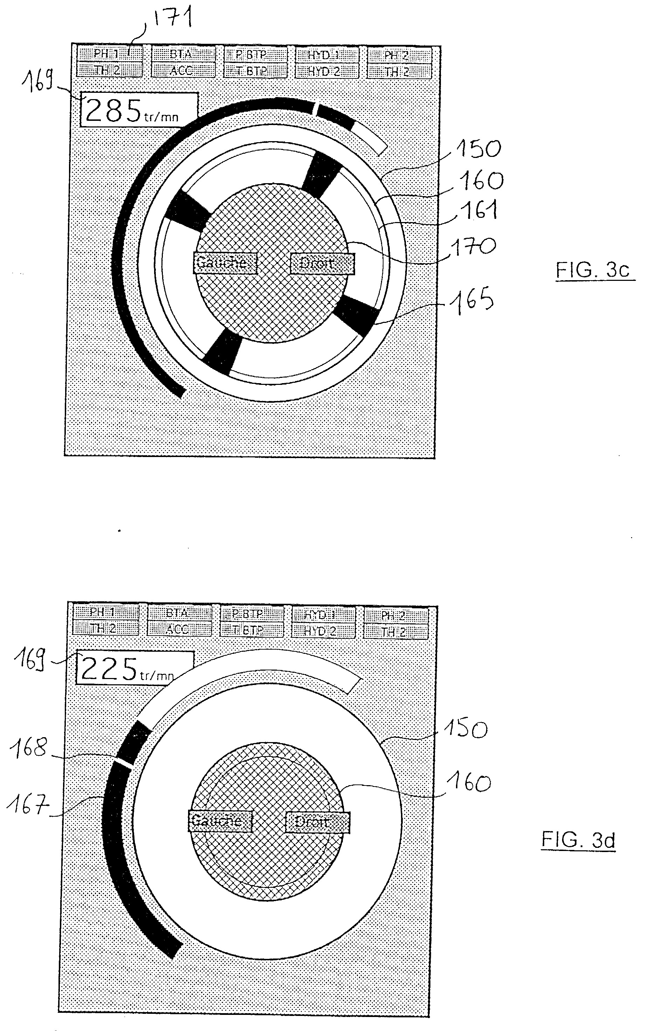

Dans le cas d'un vol sans puissance, c'est-à-dire sans puissance moteur pour tenir le point considéré, ce cas couvrant le vol avec moteur disponible et pas collectif réduit au minimum, et celui après perte totale de la motorisation, les régimes rotor s'inscrivent dans une surface cadre 150 image de la vitesse maximale de rotation rotor, comme présenté sur les figures 3b et 3c, dont la taille est l'image de sa valeur au point de vol considéré et dont la forme est soit celle de la puissance délivrable par l'hélicoptère s'il est motorisé, soit un cercle s'il ne l'est plus comme présenté sur les figure 3c.
Dans la suite la vitesse de rotation du rotor sera aussi appelée régime du rotor et sa figuration est précisée.
De plus, les indications comportent :
- un premier cercle 160 de diamètre variable image du régime rotor instantané et comportant une figuration 165 de rotor en rotation,
- un deuxième cercle 170 de diamètre variable image de la position du pas collectif. Ce deuxième cercle, le plus petit, couvre partiellement le premier jusqu'à ce que le pilote agisse, par traction, sur le pas collectif ce qui entraîne une réduction du régime instantané du régime rotor, se traduisant sur le cadran :
- soit par une superposition des premier et deuxième cercles lorsque les moteurs sont disponibles et fournissent de nouveau une puissance au rotor et, ensuite, au passage au mode d'affichage de la figure 3a,
- soit, dans le cas de la panne moteur, au recouvrement du premier cercle par le second.

De façon avantageuse, une hystérésis limite les instabilités de transition entre les figurations avec et sans puissance.

L'écart entre la surface cadre 150 et le premier cercle 160 est, de préférence, affiché à tout instant à l'aide d'une couleur représentative de l'écart entre les régimes maximum et instantané, par exemple vert pour un écart important et ambre pour un écart très faible.

Le rotor, symbolisé par des "extrémités de pale" 165, tourne lorsque l'indicateur présente ces figurations et sa vitesse de rotation est fonction de l'écart entre le régime réel instantané et le régime image du pas collectif. De préférence, ce rotor 165 tourne très vite lorsque l'écart est important est très lentement lorsqu'il est faible.

Cet affichage est complété par le tracé 161 des valeurs prédites du régime rotor instantané à très court terme.

Cette prédiction permet au pilote d'utiliser toute la plage d'excursion en régime sans manoeuvre brusque perturbant la variation du régime rotor ou amenant une resynchronisation brutale.

Dans le cas d'une fin de vol après perte du ou des moteurs, les indications, comme montrées sur la figure 3d sont les suivantes :
- les régimes rotors 150, 160 respectivement maximal et instantané, sous forme de cercles de taille fixe pour le régime maximal et variable pour l'instantané, notamment croissant lors de la prise de tours et décroissant lors de la traction sur le pas collectif pour amortir le contact avec le sol.
- afin de donner une grande sensibilité à l'information de régime rotor instantané, celle-ci est également affichée, comme présentée à la figure 3d sous forme d'un arc de cercle 167 proportionnel au régime rotor. De surcroît, un index 168 répète les positions prédites à très court terme et l'affichage de la valeur numérique 169 est mise en relief.

Enfin, dans tous les types de fonctionnement précédemment envisagés, sont affichées :
- les valeurs numériques précises 169 des paramètres limitatifs,
- des pavés 171, de préférence colorés, pour des facteurs limitatifs secondaires tels que la pression et la température des moteurs et des ensembles transmissions mécaniques, ainsi que le bon fonctionnement des servitudes hydrauliques et des accessoires, prélèvements divers (dégivrage, conditionnement d'air...)
- une échelle chronomètre 180 du temps d'utilisation éventuel d'une puissance supérieure à la puissance maximale continue, par exemple lors des phases de décollage ou d'atterrissage, ou lors des phases critiques en cas de panne d'un moteur.
- deux fenêtres représentant l'éventuelle ouverture des vannes de décharge dans le cas d'un turbomoteur.
- des pavés 172, de préférence rouges, signalant la perte d'un ou des moteurs accompagnés de la suppression de l'affichage des valeurs numériques des paramètres du moteur incriminé.
Ces mêmes notions de marge de puissance et de prédiction de puissance consommée peuvent être présentées sous forme très synthétique dans un viseur tête haute de pilotage.

Dans le cas d'un vol avec puissance, certaines caractéristiques complémentaires relatives à l'évolution des indications sont affichées. On peut notamment mentionner :
- les échelles des paramètres, bien que non linéaires de façon à offrir une plus grande sensibilité pour les marges de puissance ou les écarts de régime les plus faibles, sont déterministes pour un cas de motorisation. Notamment, quel que soit le point de vol, une surface image devant indiquer une valeur donnée de Nᵣ,Nₜ,Tₜ et C sera toujours à la même position par rapport au centre de l'indicateur, et ce, quel que soit le point de vol, et, pour une configuration de motorisation, quelle que soit la puissance consommée en ce point de vol.
- l'image de la puissance consommée comporte trois faces à 45 degrés et un quart de cercle, reliés par des lignes brisées 115. Au fur et à mesure que les paramètres Nₜ,Tₜ et C se rapprochent de leur valeur limite, les trois faces perpendiculaires aux axes respectifs et représentatives de la puissance consommée s'agrandissent et se déplacent en se rapprochant de leur butée associée à la PMDA. Pareillement, le quart de cercle Nr se rapproche de sa butée si Nr s'approche de sa limitation, qui, en cas de vol avec motorisation, est une valeur minimale.
- simultanément, les lignes de liaison 115 s'approchent du bord de l'enveloppe 110, ne laissant qu'un faible espace, dont la surface et l'emplacement sont fonctions des marges entre les paramètres et leurs limitations, puis une forme triangulaire entre les images des puissances disponible autorisée et consommée, avec, lorsqu'un paramètre arrive sur sa limitation, sa face arrivant par exemple sur le chanfrein, la puissance consommée adhère totalement au coin de ce paramètre avec pour conséquence la disparition des formes triangulaires de ce coin, puisqu'il n'y a plus de marge du paramètre représenté.

Comme montré sur la figure 3e, lorsque le pilote a recourt à une puissance supérieure à la PMC, en l'occurrence la puissance maximale d'urgence, la marge de puissance est représentée par l'espace entre la puissance consommée et l'extrémité desdits axes correspondant au quadrilatère 105 de la puissance maximale délivrable à laquelle correspond des secondes limitations des paramètres Nᵣ,Nₜ,Tₜ et C, plus élevées que celles correspondant à la puissance disponible maximale autorisée. Les valeurs des secondes limitations dépendent de la phase de vol et peuvent correspondre à la puissance intermédiaire d'urgence, la puissance maximale d'urgence, la puissance de super urgence ou la puissance maximale au décollage.

Le remplacement, sur le cadran, de l'affichage de la puissance maximale continue par la puissance maximale délivrable se fait automatiquement dès que l'une des premières valeurs limites des paramètres Nᵣ,Nₜ,Tₜ et C est atteinte et provoque l'affichage et le déclenchement d'un chronomètre 180, de telles conditions de fonctionnement ne devant pas se prolonger au-delà du temps d'emploi autorisé et prescrit dans le manuel de vol.
Les valeurs prédites 119,121 des paramètres limitatifs pour une action limitée et maîtrisable du pilote sur le pas collectif s'inscrivent aussi de part et d'autres des valeurs instantanées correspondantes.

Bien que l'hélicoptère puisse être multi-moteurs, seules sont représentées les valeurs les plus pénalisantes des paramètres, quel que soit le moteur, puisque d'une part les moteurs ont un comportement relativement proche, sauf, cas exceptionnel, et que d'autre part, il faut respecter la première limitation rencontrée.
Pour améliorer la lisibilité de la prédiction de puissance supérieure, lorsque les marges sont très réduites, elle est matérialisée, à sa place, par un segment à 45 degrés.

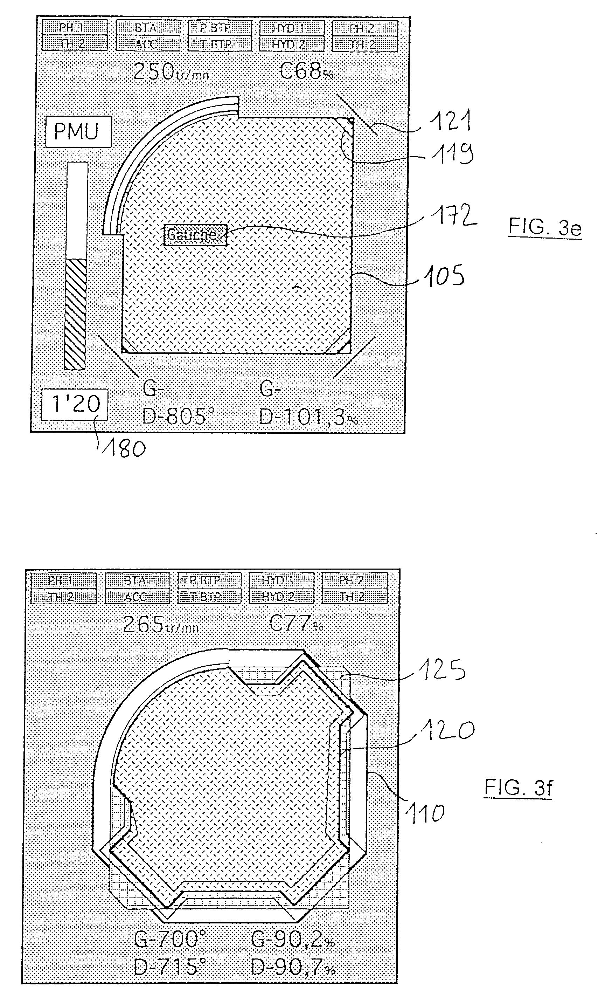

Dans le cas où la sécurité du vol ou la mission impose de pouvoir maintenir le point de vol en cours, même en cas de panne d'un turbomoteur, le pilote peut disposer, soit par choix dans un menu, soit automatiquement par logique découlant d'une intelligence artificielle interprétant la situation, de l'affichage présenté à la figure 3f, dans lequel sont indiquées les puissances disponible et consommée, respectivement 110 et 120, alors que les deux moteurs fonctionnent ainsi que celle, 125, qui serait délivrable par un seul moteur en ce point de vol, permettant ainsi au pilote de comparer ces puissances et, éventuellement de modifier le point de vol afin de respecter la sécurité du vol.
Cette indication peut être inscrite à la demande du pilote, comme mentionné précédemment ou automatiquement selon différents critères liés au point de vol : altitude, hauteur de vol, vitesse (inférieure à Vy ou configuration de l'appareil : train sorti, treuil en fonctionnement). Pareillement on peut choisir le niveau de la puissance attendue : urgence ou continue.
Dans le même esprit, on peut choisir d'afficher la puissance nécessaire pour tenir un vol stationnaire/sol, avant de prendre ce point de vol, pour vérifier s'il est réalisable.

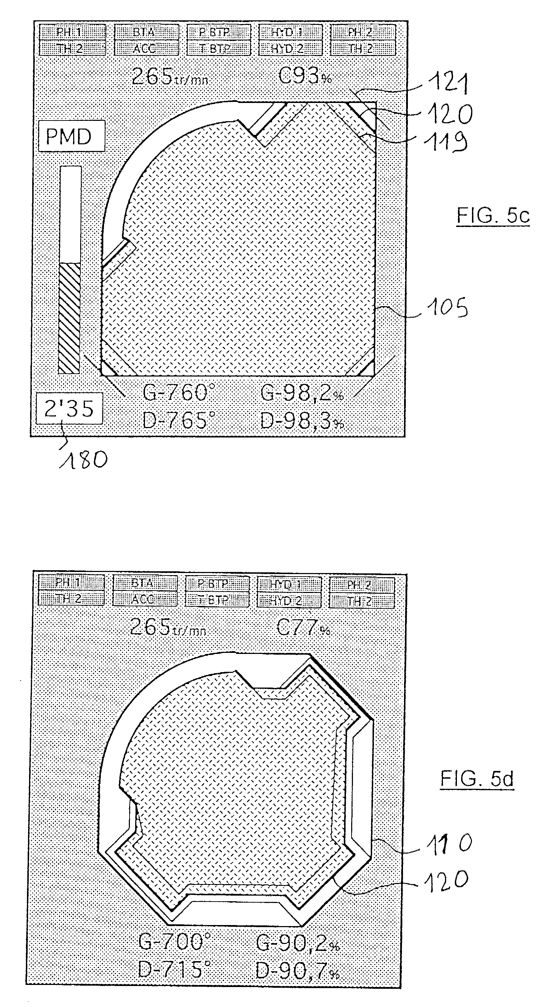

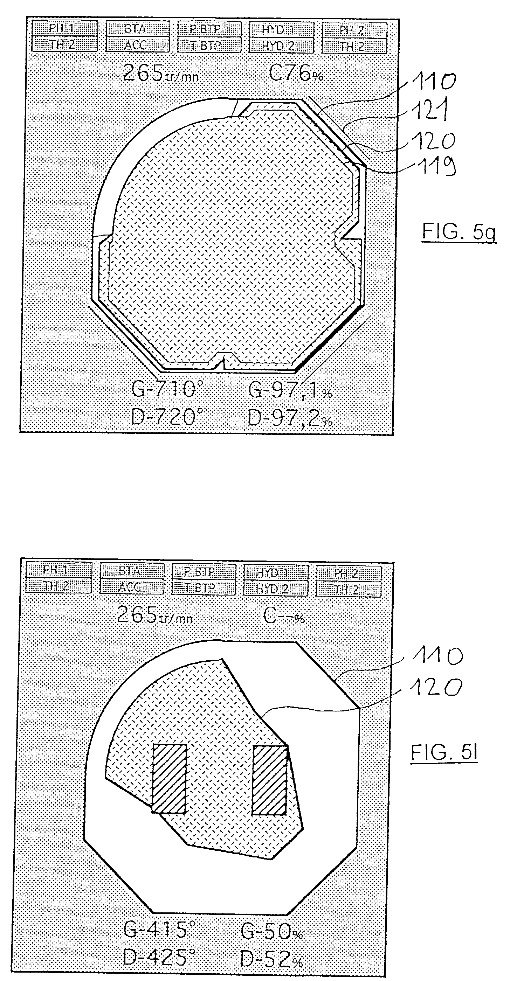

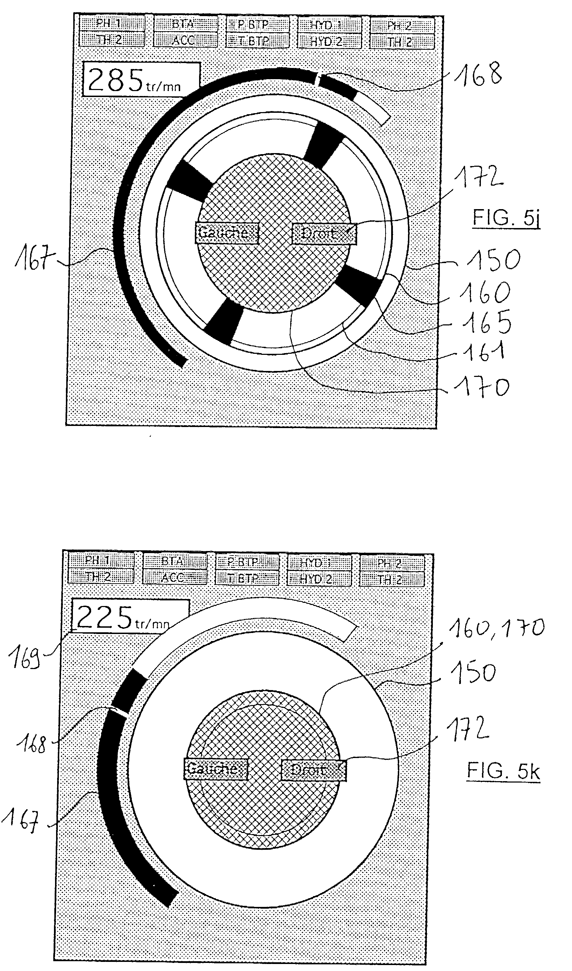

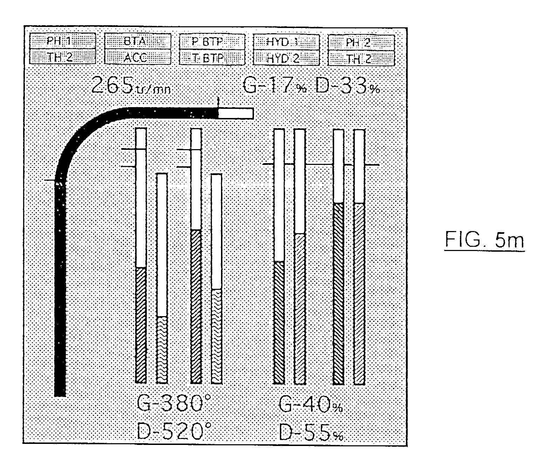

Les figures 5a à 5m représentent, chronologiquement, les indications pouvant figurer sur l'écran en tête basse lors d'un vol.
La figure 5a concerne la phase de démarrage du moteur gauche et sont représentés, sous la forme de rubans thermomètres, les paramètres limitatifs de puissance, en l'occurrence les vitesses de rotation Nᵣ, Nₜ et Nₜₗ, respectivement du rotor, de la turbine du turbomoteur et de la turbine libre des moteurs (droit et gauche), ainsi que la température devant turbine Tₜ et le débit de carburant des turbomoteurs.

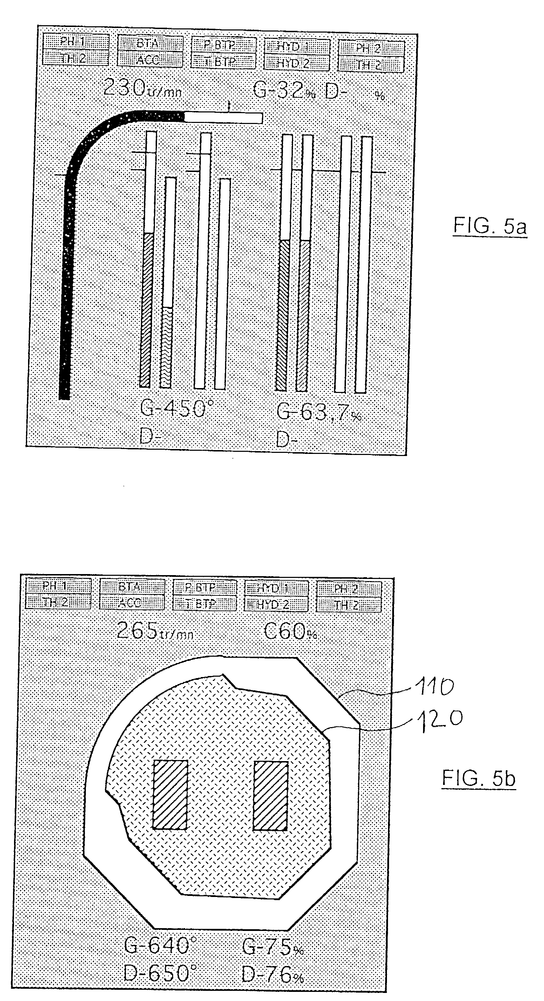

La figure 5b présentent les indications présentées lors de la phase dite de roulage de l'hélicoptère, la puissance consommée 120 pouvant être qualifiée de moyenne, l'écart entre les périmètres des surfaces 110 et 120, représentatif de la l'écart entre la puissance consommée et la PMDA, étant relativement important.
La figure 5c représente les indications présentées lors de la phase de décollage. La puissance consommée est supérieure à la puissance maximale continue et la puissance maximale est alors la puissance maximale au décollage à laquelle est associée une durée maximale de fonctionnement, d'où l'apparition du chronomètre 180 sous forme graphique et numérique. Les valeurs des paramètres limitatifs correspondant à cette puissance sont celles de chacun des coins du quadrilatère 105. Dans cet exemple, on peut noter que deux des valeurs prédites des paramètres limitatifs correspondent aux valeurs maximales des paramètres correspondants.
La figure 5d représente les indications présentées en allure de croisière, c'est-à-dire en vol avec puissance, cette dernière étant inférieure à la PMDA.

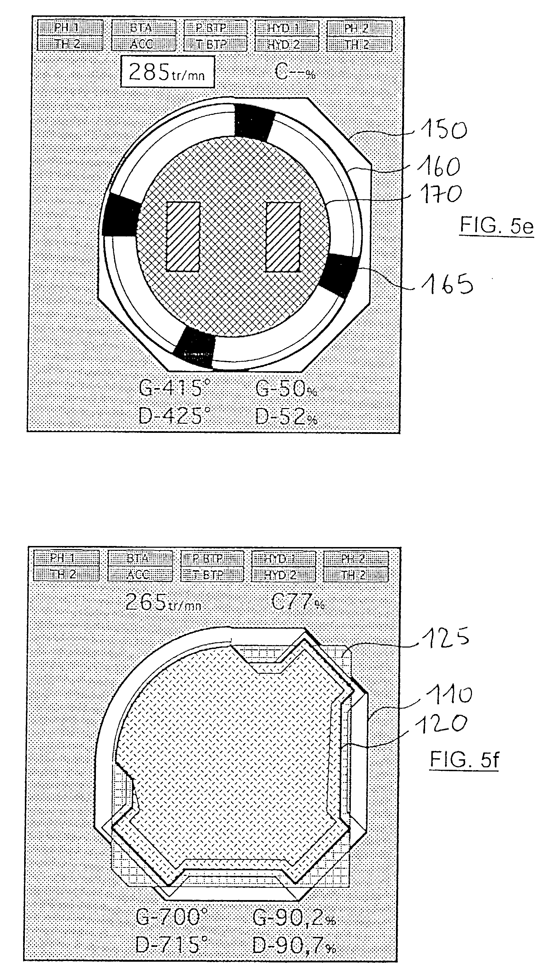

La figure 5e représente les indications présentées en vol désynchronisé c'est-à-dire sans puissance moteur pour tenir le point considéré, la motorisation étant disponible et le pas collectif réduit au minimum. L'enveloppe polygonale 150 est représentative de la PMDA tandis que sont représentés le premier cercle 160 de diamètre variable image du régime rotor instantané et comportant une figuration 165 de rotor en rotation et le deuxième cercle 170 image de la position du pas collectif.
La figure 5f représente, en plus des indications présentées normalement, celles, calculées qui serait nécessaires , en cas de panne de l'un des moteurs, pour conserver le même point de vol. Dans cet exemple, on voit que la surface 125 est supérieure à la surface 120, cela signifiant que la puissance effectivement délivrable, en ce point de vol, par (n-1) moteurs en conditions d'urgence, est supérieure à la puissance consommée au point de vol considéré et qu'en conséquence, le point de vol peut être maintenu même en cas de perte d'un moteur.
La figure 5g montre les indications présentées en cours d'atterrissage. Les valeurs des paramètres limitatifs sont légèrement inférieures aux valeurs correspondantes à la PMDA.

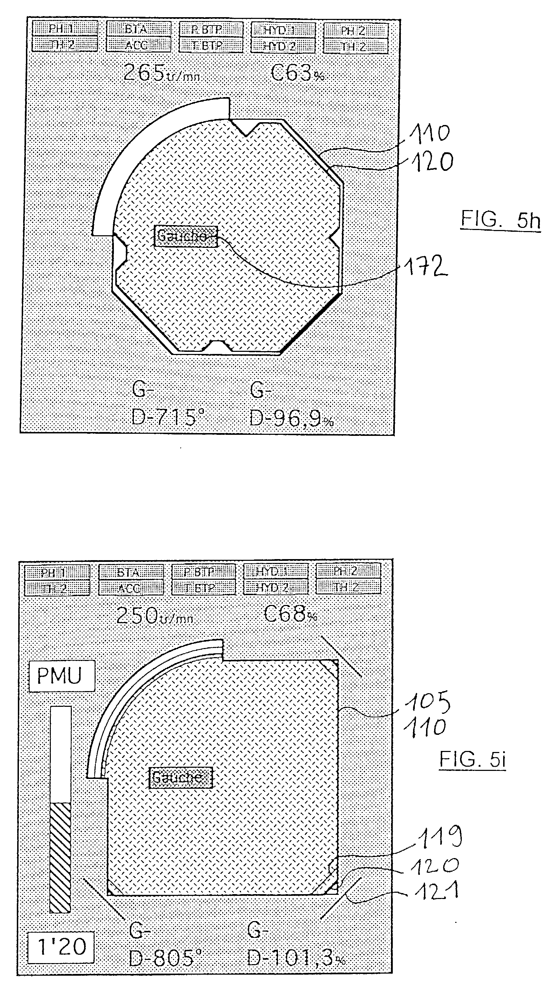

La figure 5h montre les indications présentées en allure de croisière après perte de l'un des moteurs, en l'occurrence le moteur gauche repérable par la présence d'un rectangle 164 contenant l'inscription "GAUCHE". Les valeurs des paramètres limitatifs sont légèrement inférieures aux valeurs correspondantes à la PMDA.
La figure 5i montre les indications présentées en cours d'atterrissage avec un seul moteur. Les valeurs des paramètres limitatifs sont supérieures à celles correspondant à la PMDA et légèrement inférieures à celles correspondant à la puissance maximale d'urgence (PMU) à laquelle est associée une durée maximale de fonctionnement, d'où l'apparition du chronomètre 180.
La figure 5j correspond à une phase d'approche en autorotation après perte des deux moteurs. L'enveloppe extérieure est un cercle 150 tandis que le cercle 160 de diamètre variable est l'image du régime rotor instantané et comporte une figuration 161 de rotor en rotation, et le deuxième cercle 170 est l'image de la position du pas collectif.
La figure 5k correspond à la phase d'atterrissage après perte des deux moteurs et demande de portance.
La figure 5l correspond à une phase de ralenti après atterrissage, les deux moteurs fonctionnant et la puissance consommée étant faible, le pas collectif étant au minimum et les vannes de décharge ouverte, cette ouverture étant symbolisée par deux rectangles verticaux.
Enfin la figure 5m présente la dernière phase, c'est-à-dire celle de l'extinction des moteurs. Plus précisément le schéma présenté correspond à l'arrêt du moteur gauche.

La cohérence recherchée de cet indicateur de limitation de puissance se décline selon les principes suivants :
- lorsque le pilote tire sur le pas collectif, la figure image de sa sollicitation s'agrandit. La logique est donc positive même si pour le régime moteur et en cas de vol en puissance, celui-ci décroît, le cadre représentant une valeur de Nr minimale :
- la butée se situe toujours au même endroit : c'est le cadre fixe extérieur,
- les graduations indiquent au pilote la marge de sollicitation en pas collectif, et, pour le régime rotor en autorotation, sa tendance,
- pour un point de vol sans puissance (autorotation) et pour la fin d'un vol en panne de moteur, l'indicateur utilise une logique positive pour représenter le régime rotor : à un régime (dé)croissant correspond un cercle-image (dé)croissant, le cadre représentant dans les deux cas une valeur de Nr maximale,
- la surface enveloppe visualisée est d'une forme fonction de la motorisation et, comme mentionné précédemment,
   * polygonale avec un coin en quart de cercle pour le fonctionnement avec puissance, la taille de ladite surface étant plus importante dans le cas d'un bimoteur que dans celui d'un monomoteur, et les coins étant utilisés pour des puissances supérieures à la PMDA,
   * circulaire dans les cas de fonctionnement sans puissance,
- la surface représentative des valeurs instantanées des paramètres est
   * polygonale avec un coin en quart de cercle pour le fonctionnement avec puissance,
   * circulaire dans les cas de fonctionnement sans puissance.

Dans le cas d'une mise en oeuvre de l'invention utilisant un viseur tête haute de pilotage, il est préférable, comme précédemment, de ne présenter réellement que les premières limitations, présentes et à venir, accompagnées des niveaux de puissance délivrables, mais toujours normés sous forme d'une figuration en ligne.

Aussi, il est avantageux de présenter, sur un viseur tête haute, l'information relative à l'écart de puissance sur un indicateur du type "ruban-thermomètre" ou à l'aide d'un indicateur à aiguille(s), à l'échelle non-linéaire pour offrir une plus grande résolution dans les puissances élevées. Cet indicateur peut être classique, par exemple circulaire ou rectiligne comme sur les SA 366 G des gardes côtes américains.

Dans ces deux cas, on limite les informations associées à des voyants à seuil d'alarme.

La présentation des informations relatives au régime rotor peut s'effectuer de différentes manières. A titre d'exemple : Dans le cas d'un vol avec puissance, la valeur minimale que doit avoir la vitesse de rotation Nr du rotor est intégrée dans la détermination de la première limitation au même titre que la valeur maximale de Nr et des autres paramètres limitatifs principaux Nₜ,Tₜ et C.

Dans le cas d'un vol du type désynchronisé c'est-à-dire sans puissance moteur pour tenir le point considéré, la motorisation étant disponible et le pas collectif réduit au minimum, pour une vitesse de rotation Nr supérieure à la vitesse de rotation de première limitation, (au Nr nominal,) l'échelle des puissances consommée et disponible disparaît et est remplacée par un "ruban thermomètre" dédié et non déplaçable sur la visualisation. Comme pour l'indicateur complet "tête basse" et avec la même logique, y sont portés les repères de la valeur maximale de la vitesse de rotation Nr du rotor (transitoire et continu), Nr instantané, un Nr image du pas collectif instantané et l'espace entre ces deux valeurs est animé (par exemple, espace en tiretés animés d'une vitesse de déplacement liée à la valeur du Nr instantané),

Dans le cas d'un vol avec panne totale de la motorisation, il est plus intéressant d'utiliser une figuration circulaire telle que celles présentées aux figures 3b et 3c et de l'afficher au centre de la visualisation, en surimpression des symbôlogies présentées.

La figure 6a représente l'image d'un viseur de pilotage "tête haute" d'un hélicoptère, selon une variante re réalisation de l'invention.
Comme indiqué, les conditions de vol sont les suivantes :
. Vol d'avancement, à cap constant (Cm=147°, Rm=143°, route préconisée) et en montée à, sensiblement, 2° de pente,
. Sa vitesse-air (qui suit une croissance faible) est de 122kts soit environ 60 m/s, et sa vitesse verticale (air) est de, environ, 600ft/mn, soit environ 3 m/s
. il fait face à un vent venant du travers-avant droit de 20kts, soit environ 10 m/s
. l'altitude barométrique croisée est de 3050ft, soit environ 1000 m
. les attitudes sont un tangage très faiblement à piquer et un roulis résiduel à droite.

Compte-tenu des caractéristiques de cet hélicoptère (configuration, masse, centrages,...) et du point de vol en cours (pression, température, profil du vol), le pilote a été amené à une demande de puissance relativement importante, puisque l'indicateur de première limitation signale une marge de, environ, une unité et demi de pas collectif par rapport à la limitation de puissance maximale continue la plus proche.

II est préférable que l'indicateur de première limitation n'apparaisse que lorsque la puissance consommée, en fait les valeurs des paramètres limitatifs au point de vol présent, n'est pas trop faible.

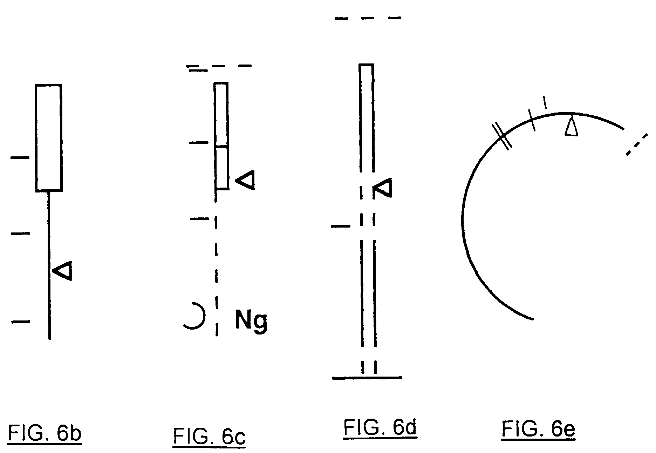

De plus les informations portées sont les suivantes :
En fonctionnement bi-moteur, l'affichage comporte, comme montré sur la figure 6b, outre le "ruban-thermomètre" :
. Les repères des puissances délivrables PMC et PMD,
. les index des puissances consommée et prédites.
En fonctionnement mono-moteur, l'affichage comporte, comme montré sur la figure 6c, outre le "ruban-thermomètre":
. les repères des puissances maximale disponible autorisée, intermédiaire d'urgence, maximale d'urgence, de super urgence,
. les index des puissances consommée et prédites,
. un secteur représentant le temps d'application de la puissance délivrable en service : à un tour complet correspond à la période autorisée (si plus de temps était nécessaire au pilote, un deuxième anneau concentrique serait inscrit),
. si la marge du premier paramètre limitatif se réduit fortement, son identification.
En fonctionnement désynchronisé (avec puissance), l'affichage comporte, comme montré sur la figure 6d, outre le "ruban-thermomètre":
. les repères des régimes maximaux continu et transitoire,
. les index des régimes instantané et prédit à (très) court terme,
. l'index du régime rotor-image de la position du pas collectif. (Le double trait pointillé du ruban est animé d'un défilement (sur lui-même) dont la vitesse est liée à l'écart des régimes rotor instantané et image de la position du pas collectif).
En cas de panne complète de(s) moteur(s), l'affichage comporte, comme montré sur la figure 6e :
. les repères des régimes maximaux (continu et transitoire) et minimal (double trait),
. les index des régimes instantané et prédits à (très) cour terme,
. tant que désynchronisé, l'index du régime rotor-image de la position du pas collectif.

Les indicateurs de limitation de puissance proposés dans ces variantes de mise en oeuvre de l'invention ne présentent pas, par les surfaces tracées, ni la puissance consommée, ni celle délivrable au point de vol en terme de valeur chiffrable en kW mais ils représentent les paramètres les plus limitatifs de cette puissance, à savoir Nᵣ,Nₜ,Tₜ et C en terme de valeurs chiffrables par rapport à leurs valeurs maximales admises.

Ainsi, pour une même surface représentative de la puissance consommée instantanée, les valeurs des quatre paramètres Nᵣ,Nₜ,Tₜ et C auront toujours la même valeur, quelle que soit la puissance réelle consommée chiffrée en kW qui pourra être différente en fonction des paramètres extérieurs, notamment l'altitude et la température de l'air.

La taille plus réduite de la taille de l'enveloppe extérieure dans le cas d'un monomoteur que dans le cas d'un bimoteur est nécessaire pour permettre de représenter la prédiction de puissance délivrable par un seul moteur, dans le cas où l'un des deux moteurs tomberait en panne. Dans ce cas, les valeurs des paramètres Nᵣ,Nₜ,Tₜ et C sont celles qui sont mesurées tandis que celles qui correspondraient au fonctionnement à un seul moteur sont calculées pour que les surfaces représentent des puissances, chiffrables en kW.

De plus, on peut noter qu'à l'aide des moyens de mesure des paramètres de premières limitations et des moyens de prédiction, il est possible d'estimer continuellement la position du pas collectif correspondant aux conditions d'atteinte de la première limitation et d'asservir ainsi un dispositif de type première butée de pas collectif, souple et surpassable, ce dispositif avertissant alors le pilote, par voie tactile, de la proximité et du dépassement de la puissance maximale autorisée.

## Revendications

1. Dispositif d'aide au pilotage d'un aéronef comportant des moyens (10) de mesure de la valeur instantanée de variables physiques relatives notamment aux moyens de propulsion et aux conditions d'environnement, caractérisé en ce qu'il comporte des moyens (70) aptes à visualiser, en tout point du domaine de vol avec puissance et à partir desdites valeurs mesurées, une information représentative de l'écart entre la puissance consommée par les moyens de propulsion et une puissance maximale prédéfinie, ces moyens (70) comportant un processeur de bord (80) dans lequel à été introduite la modélisation de la mécanique de vol ainsi que celle des moteurs dans tout le domaine de vol de l'aéronef, et un écran de visualisation (90).

2. Dispositif selon la revendication 1, caractérisé en ce que ces moyens (70) sont aptes à visualiser, en plus de ladite information et à partir du modèle de la mécanique du vol et de celui des moteurs, des informations relatives à l'évolution de cet écart correspondant à une variation faible de la commande principale de puissance.

3. Dispositif selon l'une quelconque des revendications 1 et 2, caractérisé en ce que ces moyens (70) sont aptes à déterminer le mode de fonctionnement de l'aéronef à partir desdites valeurs mesurées.

4. Dispositif selon l'une quelconque des revendications précédentes, caractérisé en ce que les puissances consommée et maximale sont représentées respectivement par les valeurs instantanées et maximales des variables mesurées limitatives de puissance et en ce que l'information relative à l'écart entre ces puissances correspond à l'écart le plus faible, entre la valeur instantanée et la valeur maximale, de ces variables limitatives.

5. Dispositif selon la revendication 4, caractérisé en ce que les valeurs instantanées et maximales des variables mesurées limitatives de puissance sont visualisées, sur l'écran (90), sur des axes, différents pour chaque variable mais ayant la même origine (O).

6. Dispositif selon l'une quelconque des revendications 4 et 5, caractérisé en ce qu'il est appliqué à un hélicoptère à turbomoteur(s) et en ce que les variables limitatives principales sont mesurées par quatre capteurs principaux (20,30,40,50) respectivement de la vitesse de rotation (Nᵣ) du rotor, de la vitesse de rotation (Nₜ) de la turbine du turbomoteur, de la température (Tₜ) de la turbine et du couple (C) de transmission mécanique.

7. Dispositif selon la revendication 6, caractérisé en ce que les valeurs instantanées de la vitesse par rapport à l'air de l'hélicoptère, de sa hauteur par rapport au sol, de son altitude, de la pression et de la température du ou des moteurs, du débit de carburant, des positions des commandes de vol ainsi que de la vitesse par rapport au sol, sont mesurées afin de déterminer le mode de fonctionnement de l'hélicoptère.

8. Dispositif selon la revendication 7, caractérisé en ce que la puissance maximale est la puissance maximale disponible autorisée.

9. Dispositif selon la revendication 8 caractérisé en ce que les moyens (70) sont aptes à visualiser et à déclencher un chronomètre (180) lorsque la puissance instantanée dépasse la puissance maximale disponible autorisée.

10. Dispositif selon la revendication 7, caractérisé en ce que, dans le cas d'un vol sans puissance, les moyens (70) sont aptes à visualiser une information liée uniquement à la vitesse de rotation du rotor.

11. Dispositif selon l'une des revendications 1 à 7, caractérisé en ce que lorsque l'hélicoptère est multi-moteurs, les moyens (70) sont aptes à visualiser une information représentative de la puissance maximale de l'hélicoptère en l'absence d'un moteur.

12. Dispositif selon l'une quelconque des revendications 4 et 5, caractérisé en ce qu'il est appliqué à un avion à turbomoteur et en ce que les variables limitatives principales sont mesurées par quatre capteurs principaux, respectivement de la vitesse de rotation (Nh) de l'hélice, de la vitesse de rotation (Nt) du rotor de la turbine du turbomoteur, de sa température (Tₜ) et du couple (C).

13. Dispositif selon l'une quelconque des revendications 4 et 5, caractérisé en ce qu'il est appliqué à un hélicoptère à moteur à explosion et en ce que les variables limitatives principales sont mesurées par quatre capteurs principaux respectivement de la vitesse de rotation (Nᵣ) du rotor, de la vitesse de rotation (Nm) du moteur, de la température (Tm) de la culasse et du couple (C) de transmission mécanique.

14. Dispositif selon l'une quelconque des revendications 1 à 13, caractérisé en ce qu'il comporte des moyens associés à la commande principale de puissance et aptes à avertir le pilote, par voie tactile, de la proximité ou du dépassement de la puissance maximale autorisée.

## Patentansprüche

1. Flughilfevorrichtung in Luftfahrzeugen anhand von Mitteln (10) zum Messen des momentanen Wertes der physikalischen Variablen in Bezug insbesondere auf die Antriebsmittel und auf die Umgebungsbedingungen, dadurch gekennzeichnet, daß sie Mittel (70) zum Anzeigen, in jedem Punkt des Flugbereiches bei Motorleistung und ausgehend von den besagten gemessenen Werten, einer repräsentativen Information über den Abstand zwischen dem Leistungsverbrauch der Antriebsmittel und einer vorgegebenen maximalen Leistung umfaßt, wobei diese Mittel (70) einen Bordprozessor (80), in welchen die Modellisierung der Flugmechanik und der Triebwerke im gesamten Flugbereich des Luftfahrzeugs eingegeben wurde, sowie ein Anzeigegerät (90) beinhalten.

2. Vorrichtung gemäß Patentanspruch 1, dadurch gekennzeichnet, daß diese Mittel (70) in der Lage sind, zusätzlich zu der besagten Information und ausgehend vom Modell der Flugmechanik und der Triebwerke, Informationen in Bezug auf die Entwicklung dieses Abstands, welcher einer schwachen Variation des Hauptleistungsantriebs entspricht, anzuzeigen.

3. Vorrichtung gemäß einem der Patentansprüche 1 und 2, dadurch gekennzeichnet, daß diese Mittel (70) in der Lage sind, den Betriebsmodus des Luftfahrzeugs ausgehend von den besagten gemessenen Werten zu bestimmen.

4. Vorrichtung gemäß einem der vorstehenden Patentansprüche, dadurch gekennzeichnet, daß der Leistungsverbrauch und die maximale Leistung jeweils anhand von momentanen und maximalen Werten der gemessenen, die Leistung einschränkenden Variablen dargestellt werden, und daß die Information in Bezug auf den Abstand zwischen diesen Leistungen dem kleinsten Abstand zwischen dem momentanen Wert und dem maximalen Wert dieser einschränkenden Variablen entspricht.

5. Vorrichtung gemäß Patentanspruch 4, dadurch gekennzeichnet, daß die momentanen und maximalen Werte der gemessenen, die Leistung einschränkenden Variablen auf dem Anzeigegerät (90) in für jede Variable unterschiedlichen Achsen, welche jedoch denselben Ursprung (O) haben, angezeigt werden.

6. Vorrichtung gemäß einem der Patentansprüche 4 und 5, dadurch gekennzeichnet, daß sie für einen Hubschrauber mit Antrieb durch (einen) Turbomotor(en) angewendet wird, und daß die wesentlichen einschränkenden Variablen von vier jeweils die Drehzahl (Nᵣ) des Rotors, die Drehzahl (Nₜ) der Turbine des Turbomotors, die Temperatur (Tₜ) der Turbine und das mechanische Übertragungsmoment (C) ermittelnden Hauptsensoren (20, 30, 40, 50) gemessen werden.

7. Vorrichtung gemäß Patentanspruch 6, dadurch gekennzeichnet, daß die momentanen Werte der Geschwindigkeit des Hubschraubers im Verhältnis zur Luft, seiner Höhe im Verhältnis zum Boden, seiner Flughöhe, des Drucks und der Temperatur des Triebwerks oder der Triebwerke, des Treibstoffdurchflusses, der Stellungen der Flugsteuereinrichtungen sowie der Geschwindigkeit im Verhältnis zum Boden gemessen werden, um den Betriebsmodus des Hubschraubers zu bestimmen.

8. Vorrichtung gemäß Patentanspruch 7, dadurch gekennzeichnet, daß die maximale Leistung der zugelassenen verfügbaren maximalen Leistung entspricht.

9. Vorrichtung gemäß Patentanspruch 8, dadurch gekennzeichnet, daß die Mittel (70) in der Lage sind, einen Chronometer (180) anzuzeigen und auszulösen, sobald die momentane Leistung die zugelassene verfügbare maximale Leistung überschreitet.

10. Vorrichtung gemäß Patentanspruch 7, dadurch gekennzeichnet, daß die Mittel (70) bei Flug ohne Motorleistung in der Lage sind, eine ausschließlich die Drehzahl des Rotors betreffende Information anzuzeigen.

11. Vorrichtung gemäß einem der Patentansprüche 1 bis 7, dadurch gekennzeichnet, daß, wenn es sich um einen von einem oder mehreren Motoren betriebenen Hubschrauber handelt, die Mittel (70) in der Lage sind, eine repräsentative Information über die maximale Leistung des Hubschraubers bei Ausfall eines Triebwerkes anzuzeigen.

12. Vorrichtung gemäß einem der Patentansprüche 4 und 5, dadurch gekennzeichnet, daß sie für ein Flugzeug mit Turbomotorantrieb angewendet wird, und daß die wesentlichen einschränkenden Variablen von vier jeweils die Drehzahl (Nh) des Propellers, die Drehzahl (Nₜ) des Rotors der Turbine des Turbomotors, ihre Temperatur (Tₜ) und das Drehmoment (C) ermittelnden Hauptsensoren gemessen werden.

13. Vorrichtung gemäß einem der Patentansprüche 4 und 5, dadurch gekennzeichnet, daß sie für einen Hubschrauber mit Antrieb durch einen Verbrennungsmotor angewendet wird, und daß die wesentlichen einschränkenden Variablen von vier jeweils die Drehzahl (Nᵣ) des Rotors, die Drehzahl (Nₘ) des Motors, die Temperatur (Tₘ) des Zylinderkopfes und das mechanische Übertragungsmoment (C) ermittelnden Hauptsensoren gemessen werden.

14. Vorrichtung gemäß einem der Patentansprüche 1 bis 13, dadurch gekennzeichnet, daß sie mit dem Hauptleistungsantrieb verbundene Mittel umfaßt, die in der Lage sind, den Pilot auf dem Tastweg über die Annäherung an oder das Überschreiten der zugelassenen maximalen Leistung zu informieren.

## Claims

1. Apparatus for helping to pilot an aircraft, the apparatus including means (10) for measuring the instantaneous values of physical variables relating in particular to the propulsion means and to the environmental conditions, said apparatus being characterized in that it includes display means (70) suitable for displaying information at any point in the domain of flight with power and on the basis of said measured values, which information is representative of the difference between the power as consumed by the propulsion means and a predefined maximum power, said display means (70) comprising a display screen (90) and an on-board computer (80) into which a model of the flight mechanics has been input as has a model of the engines throughout the entire flight domain of the aircraft.

2. Apparatus according to claim 1, characterized in that, in addition to being suitable for displaying said information, and on the basis of the flight mechanics model and of the model of the engines, the display means (70) are suitable for displaying information relating to variations in said difference corresponding to small variations in the main power control.

3. Apparatus according to claim 1 or 2, characterized in that the display means (70) are suitable for determining the operating mode of the aircraft on the basis of said measured values.

4. Apparatus according to any preceding claim, characterized in that the consumed power and the maximum power are represented respectively by the instantaneous values and by the maximum values of the power-limiting measured variables, and in that the information relating to the difference between the power values corresponds to the smallest difference between the instantaneous values and the maximum values of respective ones of said limiting variables.

5. Apparatus according to claim 4, characterized in that the instantaneous and the maximum values of the power-limiting measured variables are displayed on the screen (90) along axes which are different for each variable but which have the same origin (O).

6. Apparatus according to claim 4 or 5, characterized in that it is applied to a helicopter having one or more turbine engines, and in that the main limiting variables are measured by four main sensors (20, 30, 40, 50) for sensing respectively the speed of rotation (Nᵣ) of the rotor, the speed of rotation (Nₜ) of the turbine of the turbine engine, the temperature (Tₜ) of the turbine, and the mechanical transmission torque (C).

7. Apparatus according to claim 6, characterized in that the instantaneous values of the speed of the helicopter relative to air, of its height relative to the ground, of its altitude, of the engine pressure and temperature, of the fuel flow rate, of the positions of the flight controls, and of the speed relative to the ground are measured in order to determine the operating mode of the helicopter.

8. Apparatus according to claim 7, characterized in that the maximum power is the maximum authorized available power.

9. Apparatus according to claim 8, characterized in that the display means (70) are suitable for displaying and for triggering a stopwatch (180) when the instantaneous power exceeds the maximum authorized available power.

10. Apparatus according to claim 7, characterized in that, in the case of flight without power, the display means (70) are suitable for displaying information related solely to the speed of rotation of the rotor.

11. Apparatus according to any one of claims 1 to 7, characterized in that, when the helicopter is a multi-engined helicopter, the display means (70) are suitable for displaying information representative of the maximum power of the helicopter in the absence of an engine.

12. Apparatus according to claim 4 or 5, characterized in that it is applied to a turbine-engine aeroplane, and in that the main limiting variables are measured by four main sensors for sensing respectively the speed of rotation (Nₚ) of the propeller, the speed of rotation (Nₜ) of the rotor of the turbine of turbine engine, the temperature (Tₜ) thereof, and the torque (C).

13. Apparatus according to claim 4 or 5, characterized in that it is applied to a helicopter having an internal combustion engine, and in that the main limiting variables are measured by four main sensors for sensing respectively the speed of rotation (Nᵣ) of the rotor, the speed of rotation (Nₑ) of the engine, the temperature (Tₑ) of the cylinder head, and the mechanical transmission torque (C).

14. Apparatus according to any one of claims 1 to 13, characterized in that it includes means associated with the main power control and suitable for warning the pilot in tactile manner that the maximum authorized power is close or is exceeded.
